# EUROPEAN PATENT APPLICATION

(11) **EP 0 967 764 A2**
(43) Date of publication of application: **29.12.1999**
(21) Application number: 99111294.7
(22) Date of filing: 10.06.1999
(51) Int. Cl.: H04L 29/06

(54) **Improved apparatus and methods to realize H.323 proxy services**

(30) Priority: 25.06.1998 US 104885
(71) Applicant: Siemens Information and Communication Networks, Boxa Raton, Florida 33487 (US)
(72) Inventor: Sassin, Michael, Lawrenceville, NJ 08648 (US); Shaffer, Shmuel, Palo Alto, CA 94301 (US); Korpi, Markku J, 82319 Starnberg (DE); Stephens, Robert W, Sunnyvale, CA 94087-2235 (US)
(74) Representative: Allen, Derek

(57) **Abstract**

The present invention provides a proxy that allows disparate communication devices or endpoints to communicate with each other independent of the type of communication software that the communication devices are utilizing. The proxy allows the communication devices to fully utilize their full set of communication functions, avoiding the downgrading of functions to accommodate a communication device with fewer functions. In one embodiment a proxy is coupled to a first endpoint and a second endpoint. The proxy and the first and second endpoints are in communication with each other through a network. The first endpoint communicates with the second endpoint using a first communication protocol and the second endpoint communicates with the first endpoint using a second communication protocol. The proxy provides compatible communications between the first endpoint and the second endpoint when the first and the second communication protocols are different. The first and the second communication protocols may be different in that they are different versions of a communication protocol. In some embodiments, the proxy may act as an intermediary for all communication between the endpoints; and in other embodiments the proxy facilitates only signaling communication between endpoints. In some embodiments, the proxy also provides compatible communication between the first and second endpoints when the first and second communication protocols are identical.

## Description

### CROSS-REFERENCE TO RELATED APPLICATIONS

The present application is a continuation-in-part of commonly-owned U.S. patent application no. 09/104,885 (Attorney Docket No. 98P7567US) filed June 25, 1998 and entitled "Apparatus and Method to Realize H-323 Proxy Services".

### BACKGROUND OF THE INVENTION

The present invention relates generally to computer and communication systems. More specifically, the present invention relates to communications over a computer network.

In recent years computer networks have been used to perform many functions. Historically, computer networks were used merely to carry information between separate computing devices. Today, computer networks are used to carry computer data, video, audio and telephony information. While the increased use of computer networks to facilitate many different types of communications have brought about vast improvements in the way people communicate, the advances have not been totally flawless.

For example, although people may wish to communicate over the computer networks typically the users must use similar, if not the same, types of communication devices. Generally, the communication devices are computers themselves with specialized communication software. As is well known in the software industry, different versions of the same piece of software may exist at any one time. Thus, different versions of communication software, which allow people to communicate over a computer network, have proliferated.

It has become an increasing problem for people to communicate with the same version of a particular piece of communication software. Often times, the different versions of communication software are somewhat, or totally, incompatible with each other. Therefore, often times certain users are allowed the ability to perform extra functions while other users are limited. In extreme cases, users with different versions of the same piece of software are not able to communicate at all.

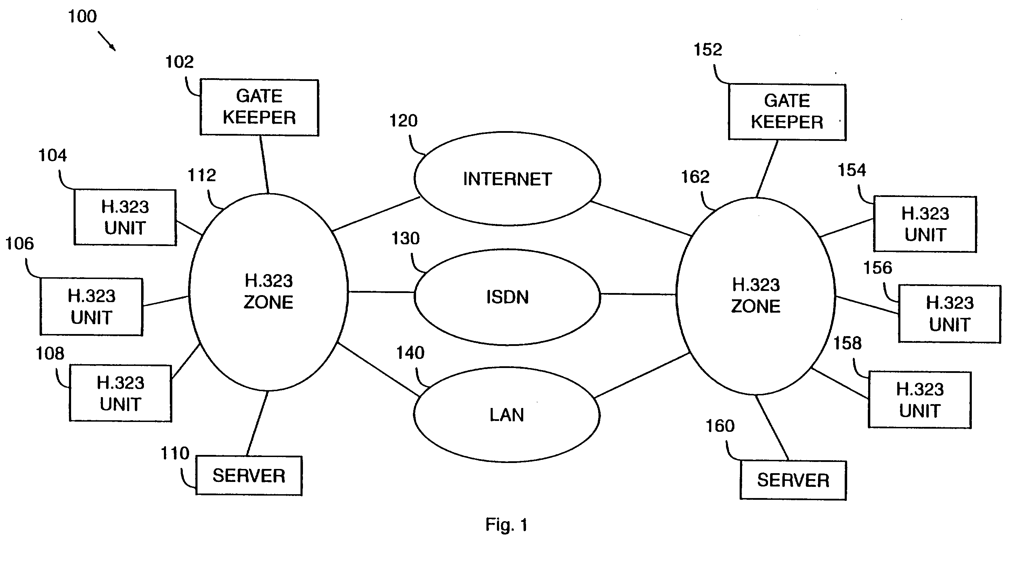

Figure 1 illustrates a typical computer network 100 used to facilitate communication between users. Computer network 100 includes two communication zones 112 and 162. The communication zones 112 and 162 may be connected to each other through any one of a number of types of computer and communication networks. For example, communication zones 112 and 162 are connected through the internet 120, an integrated services digital network (ISDN) 130 and a local area network (LAN) 140. The communication zones 112 and 162 may then be able to exchange data with each other through the different networks 120, 130 or 140.

Communication zones 112 and 162 are further coupled to a number of communication or computing devices. In the illustrated example, communication zone 112 is coupled to a gate keeper 102, communication devices 104, 106, 108, and server 110. Similarly, communication zone 162 is coupled to a gate keeper 152, communication devices 154, 156, 158, and server 160. Communication devices 104, 106, 108, 110, 154, 156, 158 and 160 may be a telephone that is capable of network communications, a computer with telephony capabilities or the like.

Gate keeper 102 typically serves to facilitate communication with communication devices 104, 106, and 108, belonging to communication zone 112. Gate keeper 102 generally contains information about the communication devices, and other networks and communication zones to which communication zone 112 is connected.

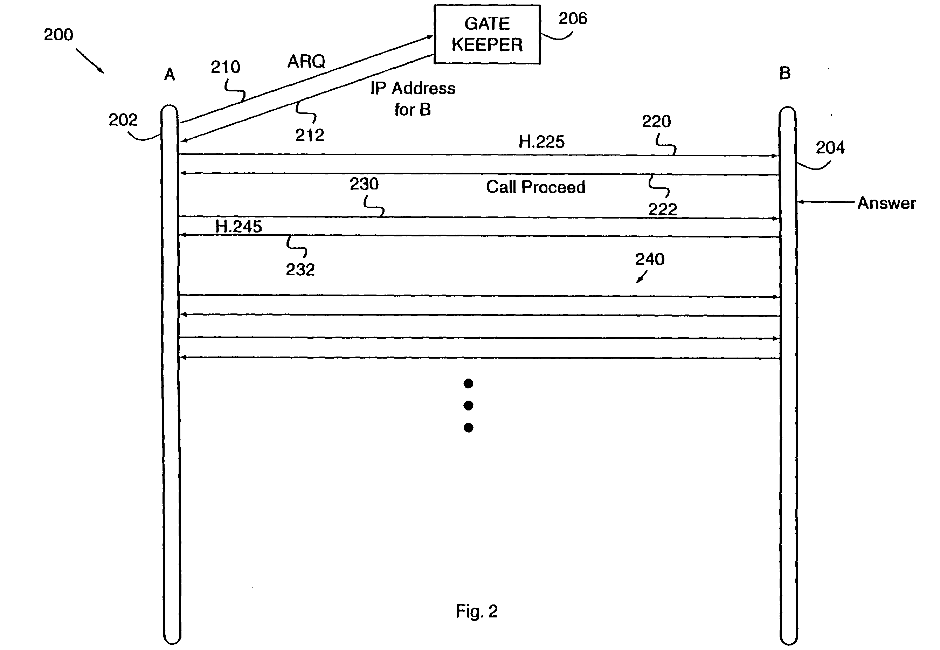

In order for one communication device (e.g., communication device 154) to communicate with another communication device (e.g., communication device 104) each communication device must be able to communicate with its own gate keeper in order to obtain the right information about the other communication unit, as described in further detail in reference to figure 2. In the illustrated example, the communication devices 104, 106, 108, 154, 156, and 158 are communication devices that implement the H.323 communication standard, such as a computer. That is, the communication devices implement the same type of communication software in order to communicate with each other. However, the communication devices may not be operating the same version of the communication software, which may hamper communication amongst each other.

Figure 2 illustrates a process 200 of two communication devices attempting to communicate with each other. The process 200 includes a communication device, or client 202 and a client 204. The process 200 also includes a gate keeper 206. In the illustrated example gate keeper 206 may be coupled to the same communication zone to which client 202 is connected. Additionally, client 204 may also be connected to the same zone and/or network.

Client 202 initially sends a request 210 to gate keeper 206 in order to begin communicating with client 204. Request 210 from client 202 requests gate keeper 206 to provide it with information about the location of client 204. Gate keeper 206 responds with a response 212. Response 212 includes at least the internet protocol (IP) address for client 204.

Now that client 202 has the IP address, analogous to a telephone number, Client 202 attempts to communicate with client 204 through an H.225 connect request 220. Once client 204 receives connect request 220 client 204 may return a "call proceeding" signal 222. A "call proceeding" signal 222 informs client 202 that the connect request has been received and that client 204 is waiting for the user to complete the connection.

Once the user of client 204 has answered, an exchange of H.245 communications 230 and 232 are initiated. Generally, H.245 communications 230 and 232 exchange information about the capabilities of each client 202 and 204. For example, clients 202 and 204 will agree upon the bandwidth at which they will communicate. Also, if compression is to be used the type of compression algorithm that will be used is decided. Further, a number of other factors are also decided during H.245 communication such as, quality, error correction, video compression if any video is involved and other factors. Also during H.245 communications 230 and 232 clients 202 and 204 determine what version of the communication software they are operating. Typically, if client 202 has an older version of with fewer functions than the version of the client 204 is implementing, clients 202 and 204 will agree to communicate operating the older version of the communication software.

Typically, the oldest version of the communication software that any one client is operating is chosen in order to allow both clients to communicate satisfactorily. The disadvantage, however, is that the other client operating the newer version may be capable of performing extra functions and/or capabilities that are now made inoperable due to the requirement of backward compatibility. Referring back to figure 2, clients 202 and 204 begin to communicate through several communication transfers 240. However, these communication transfers 240 are limited to communication transfers to which client 202 is limited.

What is desired is the ability to allow two clients operating two different versions of a particular piece of communication software to be able to communicate with each other satisfactorily, while at the same time allowing both clients to fully utilize their particular versions of the communication software. That is, clients operating older versions are enabled to communicate with all other clients operating newer versions of software, and clients operating newer versions of the communication software are given the ability to fully utilize the functions available in the newer version of the communication software.

### SUMMARY OF THE INVENTION

The present invention provides a proxy and a method of implementing a proxy that allows disparate communication devices to communicate with each other independent of the type of communication software that the communication devices or endpoints are utilizing. The proxy allows the communication devices to fully utilize their full set of communication functions, avoiding the downgrading of functions to accommodate a communication device with fewer functions. The proxy also allows for intelligent operation of functions, such as call forwarding, intelligent call forwarding, hunt groups, pickup groups and other functions. The proxy further provides a central location for storing and retrieving information about the communication devices.

In one embodiment a proxy is coupled to a first endpoint and a second endpoint. The proxy and the first and second endpoints are in communication with each other through a network. The first endpoint communicates with the second endpoint using a first communication protocol and the second endpoint communicates with the first endpoint using a second communication protocol. The proxy provides compatible communications between the first endpoint and the second endpoint when the first and the second communication protocols are not identical. The first and the second communication protocols may be different in that they are different versions of a communication protocol. The proxy also provides compatible communication between the first and second endpoints when the first and second communication protocols are identical. In some embodiments, the logical channel for the call data stream between the first and second endpoints are through the proxy; in other embodiments, the proxy arranges for the logical channel for the call data stream to be directly established between the first and second endpoints.

In a further embodiment, the proxy permits compatible communications by emulating the second endpoint. The first endpoint attempts to utilize a first function that is not compatible with the second communication protocol. The proxy emulates the second endpoint such that the first function is completed, even though the second endpoint is not capable of performing the first function.

A further understanding of the nature and advantages of the present invention may be realized by reference to the remaining portions of the specification and the drawings.

### BRIEF DESCRIPTION OF THE DRAWINGS

Figure 1 illustrates a typical computer network used to facilitate communication between users.
Figure 2 illustrates a process of two communication devices attempting to communicate with each other.
Figure 3 illustrates a communication network in accordance with an embodiment of the present invention.
Figure 4 illustrates a communication process for transferring in accordance with embodiments of the present invention.
Figure 5 illustrates a communication process for a pickup group communication in accordance with embodiments of the present invention.
Figure 6 illustrates a communication process for a hunt group communication in accordance with other embodiments of the present invention.
Figure 7 illustrates a communication process for forwarding in accordance with other embodiments of the present invention.

### DETAILED DESCRIPTION OF THE PRESENT INVENTION

The present invention provides methods and apparatus for allowing two communication devices operating different versions of communication software to communicate with each other. Further, the present invention allows the communication devices to fully utilize all the functions of their respective versions of the communication software. The present description discusses the invention in the context of communication devices or "clients", but it should be noted that the present invention will be applicable to communications between any endpoints such as clients, gateways, interactive voice response servers, and/or messaging servers.

A proxy is used to act as mediator between communication devices, or clients, operating slightly, or completely incompatible communication software or hardware. The proxy receives and relays communications between clients to ensure proper communications between the clients. If a first client is not capable of certain types of communications or functions, the proxy may emulate the necessary communications for the first client such that the second client is capable of utilizing all of its functions. The proxy provides cross version, application and platform compatibility. The proxy also provides features requiring coordination of signalling to multiple destinations (e.g., hunt group and pickup group operations) as discussed further below.

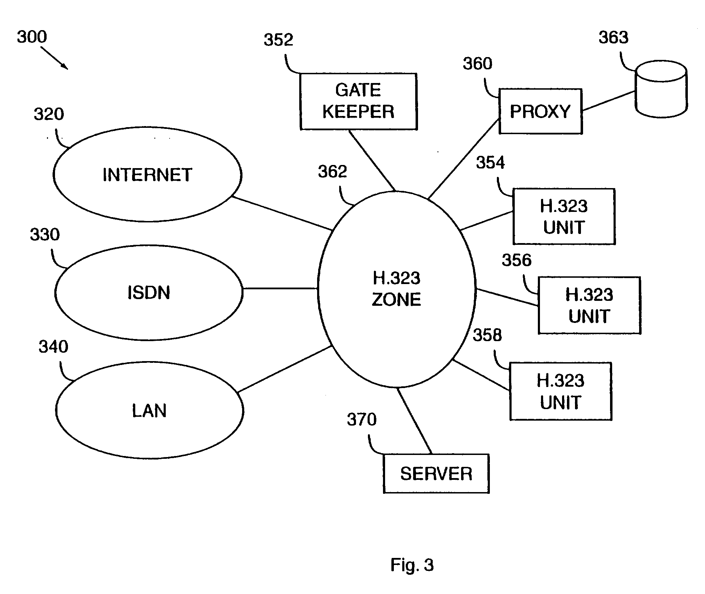

Figure 3 illustrates a communication network 300 in accordance with an embodiment of the present invention. Communication network 300 includes a communication zone 362. Communication zone 362 may be coupled to a variety of networks, including but not limited to the internet 320, an integrated services digital network 330 and a local area network 340. Through these networks 320, 330, and 340 communication zone 362 may be able to further communicate with other networks and communication zones connected thereto.

Immediately coupled to communication zone 362 are gate keeper 352, proxy 360, server 370 and communication devices 354, 356, and 358. Coupled to proxy 360 is a database 363. Communication devices 354, 356 and 358 may be any suitable type of communication devices capable of communicating through a network. By way of example, the communication devices may be telephones capable of network communications, computers with audio and/or visual communication capabilities, videophones or the like.

The illustrated embodiments of the present invention are discussed in further detail in reference to the H.323 communication protocol standard. Further other protocols related to the H.323 standard, for example, H.225.0, H.245, H.450.1, H.450.2 and H.450.3 are also discussed in reference to the illustrated embodiments of the invention.

The H.323, H.225.0, H.245 and H.450.X series communication protocols are incorporated by reference herein in their entirety, including all currently published versions of the standards. The standards may be obtained from the International Telecommunication Union at: ITU, Telecommunications Standardization Bureau, Place des Nations, CH-1211 Geneva 20, SWITZERLAND; Telephone: +41 22 730 5852; Telefax: +41 22 730 5853; Email: tsbmail@itu.int, Electronic document handling: tsbedh@itu.int; or through its website: http://www.itu.int, and its publications page: http://www.itu.int/publications/itu-t/ituth.htm.

While the illustrated embodiments focus on the H.323 standard and its related standards, the present invention is not limited to those specific standards. Any suitable communication protocol used to allow communication devices to communicate with each other through a computer network may utilize the present invention. For example, internetworking between H.323 and ISO QSIG (Q signaling), the Internet Engineering Task Force's draft standard Session Initiation Protocol (SIP) and other types of communication protocols may be utilized in accordance with the present invention.

As discussed, communication devices attempting to communicate over a computer network attempt to communicate directly with each other. However, direct communication may not be the most robust form of communication. In the present invention a proxy 360 is utilized to interpret communication between communication devices. The proxy allows the communication devices to communicate with each other even though the two communication devices are operating different versions of the same communication software/protocol, or even using different types of communication software or hardware. The proxy also allows each communication device to fully utilize all the functions of their particular communication software.

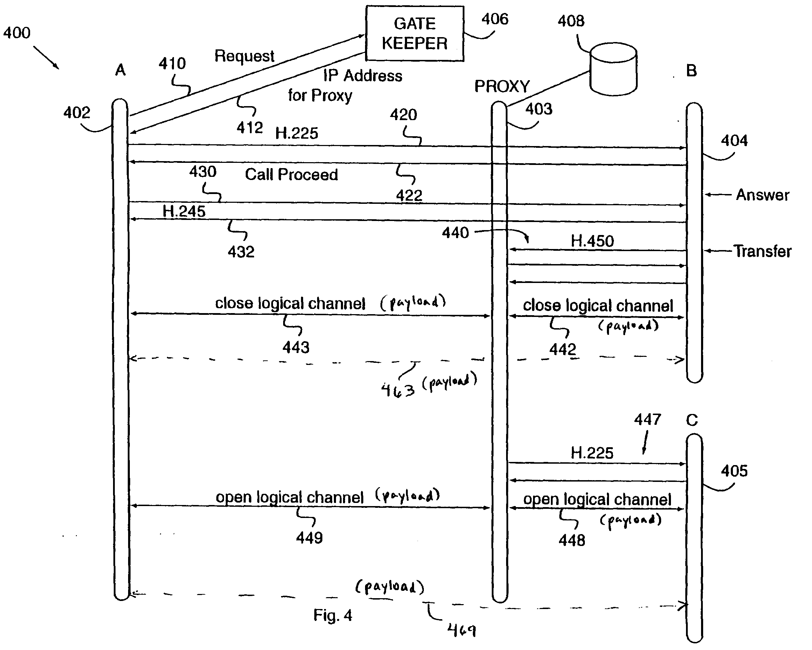

Figure 4 illustrates a communication process 400 for transferring in accordance with embodiments of the present invention. One major feature of newer versions of communication software is the ability to transfer calls. Typically, if one version of the communication software of the two communicating clients do not have the ability to transfer then neither client is capable of transferring the call. Sometimes, attempting to transfer a call results in the loss of the connection between the original clients as well. The present invention prevents the loss of capabilities, or total loss of communications, through the use of a proxy.

Referring to figure 4, a client 402 attempts to initiate a communication with client 404. Client 402 initially sends a request 410 to gate keeper 406. The request typically asks gate keeper 406 for information about client 404. Gate keeper 406 responds with a message 412 which typically includes the IP address for proxy 403 instead of client 404. The address for proxy 403 is provided as the address for all communication devices that wishes to utilize the features of the proxy 403. Thus, the addresses for all the clients serviced by proxy 403 provided to gate keeper 406 is the address for proxy 403.

After client 402 has received the IP address for proxy 403, client 402 initiates a H.225.0 communication 420 utilizing the IP address for proxy 403. Proxy 403 relays the communication 420 to client 404. The H.225.0 communication 420 signals to client 404 that client 402 is requesting communications. Client 404 responds with a "call proceeding" message 422 to proxy 403. Proxy 403 relays "call proceeding" message 422 to client 402.

Proxy 403 is coupled to a database 408. Database 408 contains information about all the clients that proxy 403 is actively servicing. The information includes the IP addresses of the clients so that proxy 403 may appropriately transfer incoming communications by using the alias of client 404, which is included in response 412 from gatekeeper 406 and H.225 communication 420. Further, the information indicates the types of functions that the clients possess. As discussed further below, the clients may also be grouped in order to perform certain types of functions. Those groupings are also contained within database 408. Alternatively, address resolution may be performed by a request and response between proxy 403 and gatekeeper 406, similar to request 410 and response 412.

At that point client 402 knows that client 404 has received the H.225.0 connect request and is waiting for the user of client 404 to answer. Once the user of client 404 has answered, clients 402 and 404 initiate H.245 communications 430 and 432 with each other. The H.245 communications 430 and 432 allow the two clients to determine the various factors involved in their communication.

Generally, H.245 communications 430 and 432 exchange information about the capabilities of each client 402 and 404. For example, clients 402 and 404 will agree upon the bandwidth at which they will communicate. Also, if compression is to be used the type of compression algorithm that will be used is decided. Further, a number of other factors are also decided during H.245 communications such as, quality, error correction, video compression (if any video is involved) and other factors. Also during H.245 communications 430 and 432 clients 402 and 404 determine what version of the communication software they are operating.

In conventional systems, if client 402 has an older version of software with fewer functions than the version of the communication software that client 404 is implementing, clients 402 and 404 agree to operate according to the older version of the communication software. In embodiments of the present inventions clients 402 and 404 may utilize all the functions of the their respective versions of the communications software. Thus, neither client needs to downgrade to an older set of functions related to an older version of the communications software.

Referring back to figure 4, up to this point communications 420, 422, 430 and 432 have been received by proxy 403 and simply relayed to the receiving client. That is, all communications 420, 422, 430 and 432 passed through proxy 403. This is because communications 420, 422, 430 and 432 are not version specific. All clients utilizing all versions of the H.323 communication protocol standard are capable of H.225.0 and H.245 communications. Proxy 403 merely receives communications from client 402 since client 402 is sending all of its communication to proxy 403, and relays them on to client 404.

Once communications have progressed the user of client 404 may wish to transfer client 402 to client 405. The H.450.2 communication protocol discusses the operation in further detail. The user of client 404 initiates the transfer which triggers a set of H.450.2 communications 440 between client 404 and proxy 403. Note that proxy 403 does not pass on any H.450.2 communications to client 402. Since client 402 is operating an older version of the communication software, which does not allow it to transfer calls, client 402 is not capable of receiving and interpreting the H.450.2 communications 440.

Proxy 403 intercepts the H.450.2 transfer request and communications 440 and acts as a proxy for client 402. In this manner client 404 may communicate with proxy 403 to complete the transfer procedure without concern that client 402 may not possess that capability. Proxy 403 closes the logical connection 442 between proxy 403 and client 404. At the same time, proxy 403 closes the logical channel 443 between client 402 and proxy 403.

Proxy 403 opens a new connection between itself and client 405 after proxy 403 has closed the connection between client 402 and client 404. Proxy 403 initiates H.225.0 communications 447 between itself and client 405. Proxy 403 retains the information transferred between clients 402 and 404 during their H.225 communications 420 and 422 and uses that information to complete the H.225 communication 447 between itself and client 405.

After the H.225.0 communications 447 have been completed proxy 403 opens logical channels between itself and client 402 and client 405 through communications 448 and 449, respectively. Thus, proxy 403 has allowed client 404 to transfer client 402 to client 405. In previous communication systems such transferring would not have been possible unless both client 402 and 404 were operating the same version of the same communication software. With proxy 403 the functionality of communication devices operating newer versions of a particular communication software is preserved while also allowing communication devices operating older versions of the communication software to benefit from the newer features.

As seen in Figure 4, some embodiments have the logical channel for the call data stream established between proxy 403 and client 402, between proxy 403 and client 404, and then between proxy 403 and client 405. In other embodiments, the proxy 403 will arrange to have the logical channel established directly between clients rather than having the proxy as an intermediary. In such embodiments, the lines 443 and 442 (signifying the closing of logical channels) would be replaced by a single doffed line 463 between clients 402 and 404 (signifying closing of a logical channel directly between clients 402 and 404), and lines 449 and 448 (signifying the opening of the logical channels) would be replaced by a single dotted line 469 (signifying the operning of a logical channel directly between clients 402 and 405). In such embodiments, the proxy facilitates only the signaling between the endpoints while the call data stream (or payload) is communicated directly over the network between the endpoints without going through the proxy.

Another feature utilized in newer versions of communication software is the pickup feature. The pickup feature in telephonic systems typically rings a number of telephones when one number is dialed. When one of the ringing telephones is picked up a connection is made with the calling telephone and the receiving telephone.

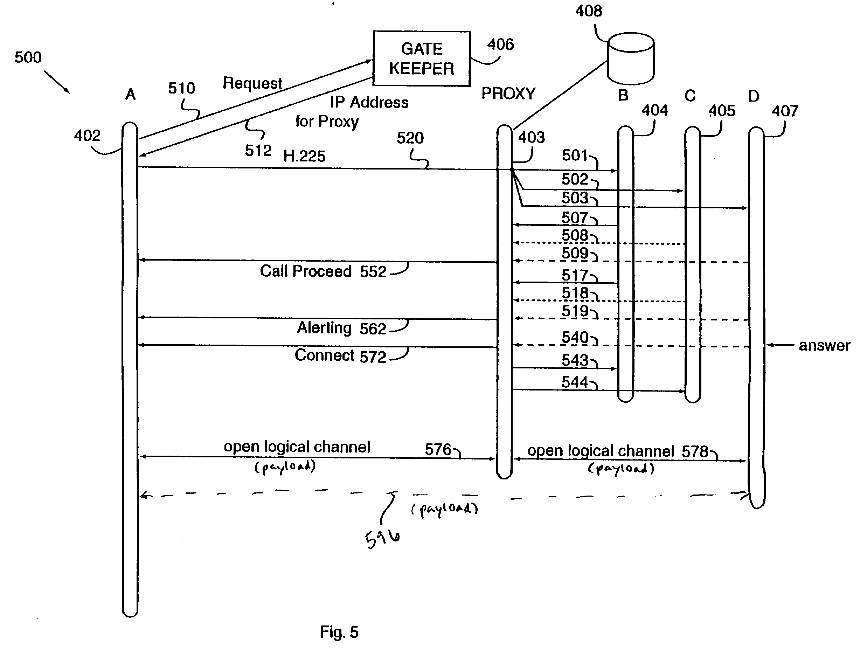

Figure 5 illustrates a communication process 500 for a pickup group communication in accordance with embodiments of the present invention. Communication process 500 begins with client 402 initiating a request 510 to gate keeper 406 for information about client 404. Gate keeper 406 provides client 402 with the IP address for proxy 403 instead of the IP address for client 404. Client 402 thereupon initiates H.225.0 communication 520 with proxy 403.

Proxy 403 receives the H.225.0 connect request communication 520. Proxy 403 consults with database 408 to retrieve the necessary information to pass along the communication. Proxy 403 realizes that client 402 is attempting to connect with client 404, which belongs to a pickup group along with clients 405 and 407. Proxy 403 therefore passes on the H.225.0 connect request to all three clients 404, 405 and 407 through communications 501, 502 and 503, respectively. Clients 404, 405 and 407 respond with "call proceeding" signals 507, 508 and 509.

So long as at least one of clients 404, 405 and 407 respond with a "call proceeding" signal proxy 403 sends a "call proceeding" signal 552 to client 402. Following up with the "call proceeding" signals, clients 404, 405 and 407 further respond with alert signals 517, 518, and 519. Proxy 403 receives at least one alert signals 517, 518 or 519 from clients 404, 405 or 406, respectively, and sends an appropriate alert signal 562 to client 402.

In the illustrated embodiment the user of client 407 answers the connect request from client 402. A connect signal 540 is sent from client 407 to proxy 403. Connect signal 540 is relayed through connect signal 572 to client 402. Also, proxy 403 sends release signals 543 and 544 to clients 404 and 405, respectively. Thus, clients 404 and 405 are no longer part of the communication. Proxy 403 then opens a logical channel between client 402 and 407 through communications 576 and 578. Typically, communications 576 and 578 include H.245 communications. In some embodiments, the logical channel (indicated by lines 576 and 578) are established via proxy 403. In other embodiments, the logical channel is established directly between clients 402 qnd 407, as shown by dotted line 596.

Thus, another example of providing a feature that might be lost between communication devices operating different versions of communication software is illustrated. In the illustrated embodiment above, a function that is not even encompassed in the H.323 and H.450.X standards is provided to the communication devices. Another useful feature in communication systems is the use of hunt groups.

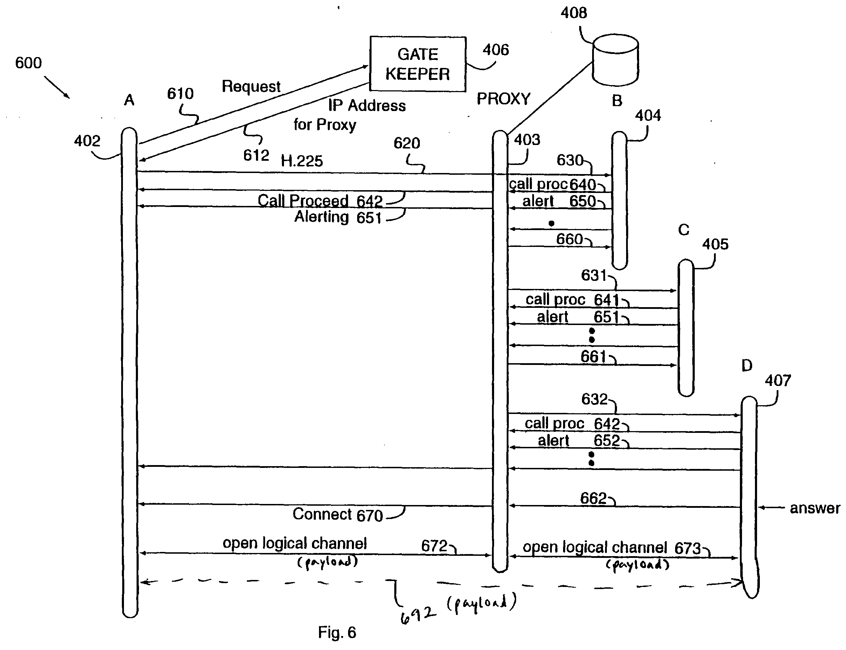

Figure 6 illustrates a communication process 600 for a hunt group communication in accordance with other embodiments of the present invention. Client 402 exchanges communications 610 and 612 with gate keeper 406 similar to the previously discussed embodiments. Client 402 then initiates an H.225.0 communication 620 with proxy 403. That communication is passed on to client 404 through communication 630, the destination of client 402's communication.

At the same time proxy 403 realizes that client 404 belongs to a hunt group. A hunt group is a group of communication devices. If a call is made to one of the communication devices of the hunt group each of the communication devices of the hunt group ring in a predetermined order if the preceding communication device does not pickup. Thus a caller can be routed through all the members of the hunt group until the caller's call is answered.

Client 404 responds to communication 630 with communication 640 and 650, indicating that the call is proceeding and that client 404 is being alerted of the call. Proxy 403 passes along the "call proceeding" signal 642 and the alert signal 651 to client 402. Client 404 continues to send alert signals 650 until a period of time has elapsed. After a predetermined amount of time proxy 403 sends a release signal 660 to client 404 since client 404 has not answered within the specified period of time.

Proxy 403 then sends an H.225.0 connect request 631 to client 405, the next member of the hunt group. Client 405 responds with a "call proceeding" signal 641 and an alert signal 652. If client 405 does not respond within a period of time proxy 405 sends a release signal 661 to client 405.

Proxy 403 sends an H.225.0 signal 632 to client 407, the last member of the hunt group. Client 407 sends a "call proceeding" signal 642 and an alert signal 652 to proxy 403. Finally, the user of client 407 answers, which triggers client 407 to send a connect signal 662 to proxy 403. Proxy 403 then sends a conned signal 670 to client 402. Proxy 403 initiates the opening of channels through communications 672 and 673 between client 402 and client 407, respectively. Communications 672 and 673 include H.245 communications. In some embodiments, the logical channel (indicated by lines 672 and 673) is established through proxy 403, but in other embodiments the logical channel may be established directly between clients 402 and 407 as seen by dotted line 692.

Referring to the discussion in reference to figures 5 and 6, the use of the proxy provides client 402 with abilities that it would not normally have. Client 402, operating a version of the particular type of communication software that does not include hunt or pickup group calling is provided the advantages of the feature through the proxy. The proxy does not require that the calling client to have the feature since the proxy can emulate the necessary communications with the destination client.

Another feature that is useful in communication systems is the ability to forward calls. Older versions of the H.323 protocol did not encompass call forwarding. However, clients operating newer versions of communication software include call forwarding as one of the functions.

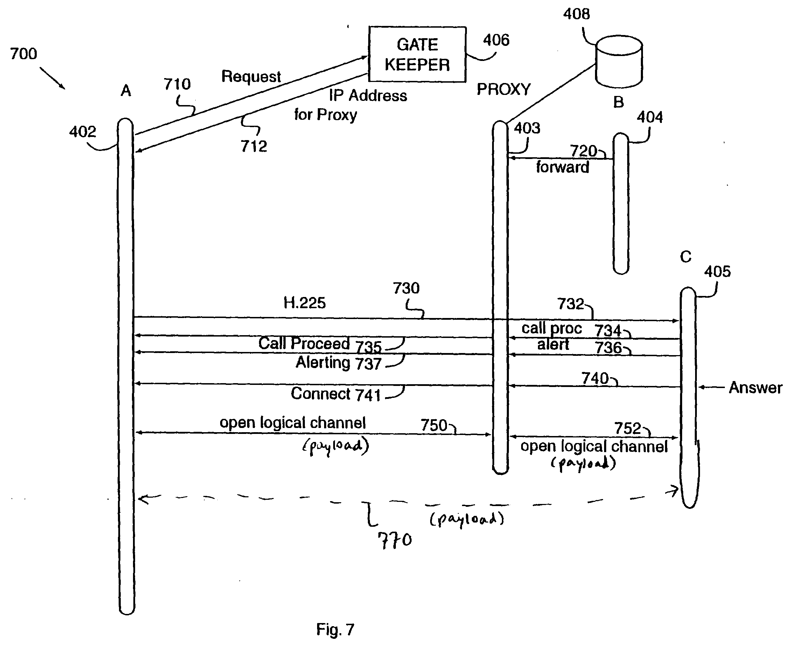

Figure 7 illustrates a communication process 700 for forwarding in accordance with other embodiments of the present invention. Client 402 initiates communications 710 and 712 with the gate keeper 406 in order to prepare to contact client 404. Previously, client 404 had sent forward signal 720 to proxy 403. Forward signal 720 informs proxy 403 that client 404 is not available and that all calls to client 404 should be forwarded to client 405. Proxy 403 stores the information in database 408.

Client 402 initiates an H.225.0 connect request 730 to proxy 403 in an attempt to reach client 404. Proxy 403 receives the connect request and looks up the relevant information for client 404. Proxy 403 learns that client 404 requested that all its calls be forwarded to client 405. As a result, proxy 403 passes on the connect request through communication 732 to client 405 instead of client 404.

Client 405 responds with "call proceeding" signal 734 and alert signal 736. Proxy 403 relays the signals as "call proceeding" signal 735 and alert signal 737 to client 402. Once the user of client 405 answers, a connect signal 740 is sent from client 405 to proxy 403. Proxy 403 relays connect signal 741 to client 402. To complete the connection proxy 403 opens logical channels between client 402 and client 405 through communication 750 and 752. In some embodiments, the logical channel between clients 402 and 405 is established via proxy 403 (as shown by lines 750 and 752). In other embodiments, the logical channel is established directly between clients 402 and 405 (seen by dotted line 770).

Thus, the use of the proxy allows client 404 to have calls forwarded to client 405. Again, client 402 operates an older version of the communication software which does not allow it to automatically forward its call to client 405. Thus, proxy 403 permits client 402 to communicate with client 405 even though its version of the communication software was not capable of forwarding.

By providing the proxy with the appropriate information a user may have all incoming calls routed to another client. In another embodiment calls may be forwarded to a messaging server, such as a voicemail server, instead of another client associated with a user.

Call screening and intelligent call forwarding may also be utilized within the scope of the present invention. All callers and users may be identified with a specific caller identification (ID). Incoming calls from certain caller IDs may be routed to a message server, while other caller IDs are routed to the client. Similarly, a person may be located at different client locations throughout a day. By logging into a client with the caller ID unique to the person the proxy is capable of forwarding all calls to the person's permanent client to the current client.

Other such features may be implemented in alternate embodiments of the present invention. In one alternate embodiment, mobile communications may be taken into consideration by including mobile communication devices within a hunt group or pickup group. Thus, a person using a mobile communication device may be informed of incoming calls regardless of the person's proximity to a fixed communication device.

The use of a proxy also centralizes information about callers and their preferences and affiliations. Rather than having calls routed through several different clients due to multiple forwarding, the proxy may intelligently place the requested connection. Affiliation information about a client's membership in different hunt and pickup groups is centralized with the proxy and may be easily changed in one location.

The present invention, therefore, allows clients to communicate with each other no matter what version of communication software the clients are currently using. Each client is also allowed to fully utilize all the functions of their respective versions of the communication software. The present invention is not limited, however, to different versions of communication software. Clients using different types of communication software or communication hardware that were at one time incompatible may now be able to communicate with each other through a proxy. The proxy also adds new features not currently specified in any standards.

While the invention has been particularly shown and described with reference to specific embodiments thereof, it will be understood by those skilled in the art that changes in the form and details of the disclosed embodiments may be made without departing from the spirit or scope of the invention. Therefore, the scope of the invention should be determined with reference to the appended claims.

## Claims

1. A proxy for facilitating communication between a first endpoint and a second endpoint, wherein the proxy and the first and second endpoints are in communication through a network, the first endpoint communicating with the second endpoint using a first communication protocol and the second endpoint communicating with the first endpoint using a second communication protocol, wherein the proxy provides compatible communications between the first endpoint and the second endpoint when the first and the second communication protocols are different.

2. A proxy as recited in claim 1, wherein the proxy also provides compatible communications between the first endpoint and the second endpoint when the first and the second communication protocols are identical.

3. A proxy as recited in claim 1, wherein the first and second communication protocols are different versions of a single communication protocol.

4. A proxy as recited in claim 1, wherein the first communication protocol includes a function that is not included in the second communication protocol, the proxy permitting the first endpoint to utilize the function by emulating the communications associated with the function such that the function is completed between the first endpoint and the proxy.

5. A proxy as recited in claim 4, wherein the function is chosen from a group of functions including transferring, hunt group routing, pickup group routing, forwarding and intelligent call forwarding.

6. A communication network comprising:
a first endpoint that operates on a first version of a H.323 communication protocol, wherein the first version of the H.323 communication protocol includes a first set of functions;
a second endpoint that operates on a second version of the H.323 communication protocol, wherein the second version of the H.323 communication protocol includes a second set of functions; and
a proxy communicatively coupled to the first and the second endpoint, the proxy allowing the first endpoint to communicate with the second endpoint such that the first endpoint is capable of utilizing all of the first set of functions and the second endpoint is capable of utilizing all of the second set of functions when the first and the second set of functions are different.

7. A communication network as recited in claim 6, wherein the proxy allows the first endpoint and the second endpoint to communicate when the first and the second set of functions are the same.

8. A communication network as recited in claim 6, wherein when the first set of functions includes a selected function that is not included in the second set of functions the first endpoint is allowed to utilize the selected function, the proxy emulating the second endpoint such that the first endpoint exchanges communications with the proxy to perform the selected function.

9. A communication network as recited in claim 8, wherein the selected function is chosen from a group of functions including transferring, hunt group routing, pickup group routing, forwarding and intelligent call forwarding.

10. A communication network as recited in claim 6, the communication network further comprising a database coupled to the proxy, wherein the database includes information about the first endpoint.

11. A method of providing compatible communication between a first and a second endpoint, the first endpoint communicating with the second endpoint using a first communication protocol and the second endpoint communicating with the first endpoint using a second communication protocol, the method comprising:
receiving a first communication from the first endpoint, the first communication being based in part upon the first communication protocol and wherein the first communication is initiated to perform a first function, wherein the first communication is not compatible with the second communication protocol; and
sending a second communication to the second endpoint in response to receiving the first communication, wherein the second communication is compatible with the second communication protocol, such that first function is accomplished.

12. A method as recited in claim 11, the method further comprising:
responding to the first communication by sending a third communication to the first endpoint to facilitate the performance of the first function, the second endpoint is emulated by the third communication.

13. A method as recited in claim 11, wherein the first function is chosen from a group of functions including transferring, hunt group routing, pickup group routing, forwarding and intelligent call forwarding.

14. A method of providing H.323 compatible communication between a first H.323 endpoint and a second H.323 endpoint, the first endpoint communicating with the second endpoint using a first version of a H.323 protocol and the second endpoint communicating with the first endpoint using a second version of the H.323. protocol, the method comprising:
receiving a first communication from the first endpoint, the first communication being a command from the first version of the H.323 protocol that is initiated to perform a first function, wherein the first communication is not compatible with the second communication protocol; and
sending a second communication to the second endpoint in response to receiving the first communication, wherein the second communication is compatible with the second communication protocol, such that the first function is accomplished.

15. A method as recited in claim 14, the method further comprising:
responding to the first communication by sending a third communication to the first endpoint to facilitate the performance of the first function, the second endpoint is emulated by the third communication.

16. A method as recited in claim 14, wherein the first function is chosen from a group of functions including of transferring, hunt group routing, pickup group routing, forwarding and intelligent call forwarding.

17. A computer program product for providing compatible communication between a first and a second endpoint, the first endpoint communicating with the second endpoint using a first communication protocol and the second endpoint communicating with the first endpoint using a second communication protocol, the computer program product comprising:
computer code for receiving a first communication from the first endpoint, the first communication being based in part upon the first communication protocol and wherein the first communication is initiated to perform a first function, wherein the first communication is not compatible with the second communication protocol;
computer code for sending a second communication to the second endpoint in response to receiving the first communication, wherein the second communication is compatible with the second communication protocol, such that first function is accomplished; and
a computer readable medium that stores the computer codes.

18. A computer program product as recited in claim 17 further comprising:
computer code for responding to the first communication by sending a third communication to the first endpoint to facilitate the performance of the first function, the second endpoint is emulated by the third communication.

19. A computer program product as recited in claim 17, wherein the first function is chosen from a group of functions including transferring, hunt group routing, pickup group routing, forwarding and intelligent call forwarding.

20. The method of claim 11 wherein said endpoints are clients and wherein said method further comprises the step of establishing a logical channel for the call data stream to be communicated over a network directly between said endpoints.
